# EUROPÄISCHE PATENTANMELDUNG

(11) **EP 4 620 286 A1**
(43) Veröffentlichungstag der Anmeldung: **24.09.2025**
(21) Anmeldenummer: 25163037.2
(22) Anmeldetag: 11.03.2025
(51) Int. Cl.: A01D 34/00, A01D 34/66, A01D 75/18

(54) **VERFAHREN ZUM VERMEIDEN EINER ÜBERLAST VON MÄHRWERKEN EINER LANDWIRTSCHAFTLICHEN ERNTEMASCHINE SOWIE EIN ENTSPRECHENDES STEUERGERÄT**

(30) Priorität: 14.03.2024 DE 102024107226
(71) Anmelder: CLAAS Saulgau GmbH, 88348 Bad Saulgau (DE)
(72) Erfinder: Ober, Martin, 78736 Epfendorf-Trichtingen (DE); Berger, Matthias, 88284 Wolpertswende (DE); Zieglschmid, Markus, 72517 Sigmaringendorf (DE)

(57) **Zusammenfassung**

Verfahren zum Betreiben einer landwirtschaftlichen Erntemaschine (1), wobei die landwirtschaftliche Erntemaschine (1) mehrere Mähwerke (3, 4, 5) zum Mähen von Erntegut aufweist, mit zumindest folgenden Schritten: Überwachen des Betriebs der Mähwerke (3, 4, 5), Erkennen einer Überlastsituation an mindestens einem der Mähwerke (3, 4, 5) abhängig von der Überwachung, Ausheben desjenigen Mähwerks (3, 4, 5), für welches eine Überlastsituation erkannt wird. Fig. 1

## Beschreibung

Die Erfindung betrifft ein Verfahren zum Betreiben einer landwirtschaftlichen Erntemaschine, ein Steuergerät zum Betreiben einer landwirtschaftlichen Erntemaschine und eine landwirtschaftliche Erntemaschine.

Aus der Praxis sind landwirtschaftliche Erntemaschinen mit mindestens einem Mähwerk bekannt. So kann eine landwirtschaftliche Erntemaschine ein Trägerfahrzeug und mindestens ein an das Trägerfahrzeug gekoppeltes Mähwerk aufweisen. Das jeweilige Mähwerk verfügt über Mähorgane zum Mähen von Erntegut.

DE 10 2005 051 543 A1 offenbart eine landwirtschaftliche Erntemaschine mit einem Trägerfahrzeug und mit drei an das Trägerfahrzeug gekoppelten Mähwerken. Die Mähwerke können das geschnittene Erntegut in Form von Schwaden ablegen bzw. auslegen.

Aus der Praxis ist es bekannt, dass ein Mähwerk einer landwirtschaftlichen Erntemaschine eine Überlastkupplung aufweist. Bildet sich an einem Mähwerk zum Beispiel ein sogenannter Stopfer aus, d.h. eine Blockierung der Mähorgane durch Erntegut, eine Erdanhäufung oder durch einen Fremdkörper, so spricht die Überlastkupplung an, um das Mähwerk vor einer Beschädigung zu schützen. Spricht eine Überlastkupplung an, so wird dieselbe im Schlupf betrieben. Bei einer im Schlupf betriebenen Überlastkupplung wird dieselbe thermisch stark belastet. Dies kann zu einer thermischen Beschädigung oder gar Zerstörung der Überlastkupplung führen.

Es besteht Bedarf daran, die Überlastkupplung eines Mähwerks vor einer thermischen Beschädigung oder gar thermischen Zerstörung zu schützen.

Hiervon ausgehend liegt der vorliegenden Erfindung die Aufgabe zugrunde, ein neuartiges Verfahren und Steuergerät zum Betreiben einer landwirtschaftlichen Erntemaschine und eine landwirtschaftliche Erntemaschine mit einem solchen Steuergerät zu schaffen.

Diese Aufgabe wird durch ein Verfahren zum Betreiben einer landwirtschaftlichen Erntemaschine nach Patentanspruch 1 gelöst.

Das erfindungsgemäße Steuergerät ist in Patentanspruch 7 ist definiert.

Die erfindungsgemäße landwirtschaftliche Erntemaschine ist in Patentanspruch 9 definiert.

Das erfindungsgemäße Verfahren umfasst zumindest folgende Schritte: Überwachen des Betriebs der Mähwerke. Erkennen einer Überlastsituation an mindestens einem der Mähwerke abhängig von der Überwachung. Ausheben desjenigen Mähwerks, für welches eine Überlastsituation erkannt wird.

Das erfindungsgemäße Verfahren erlaubt es, die Überlastkupplung eines Mähwerks vor einer zu hohen thermischen Belastung oder gar einer thermischen Zerstörung zu schützen. Wird eine Überlastsituation an mindestens einem Mähwerk erkannt, so wird dasselbe ausgehoben bzw. angehoben. Durch das Ausheben wird die Überlastsituation aufgelöst und die Überlastkupplung vor einem weiteren Wärmeeintrag geschützt.

Vorzugsweise werden zur Überwachung des Betriebs der Mähwerke Drehzahlen der Mähwerke überwacht, wobei das Erkennen einer Überlastsituation an mindestens einem der Mähwerke abhängig von der Überwachung der Drehzahlen der Mähwerke erfolgt. Das Erkennen einer Überlastsituation abhängig von Drehzahlen der Mähwerke ist besonders bevorzugt.

Vorzugsweise werden zumindest bezogen auf eine Überlastkupplung des jeweiligen Mähwerks abtriebsseitige Drehzahlen der Mähwerke überwacht, wobei eine Überlastsituation an mindestens einem der Mähwerke zumindest abhängig von der abtriebsseitigen Drehzahl des jeweiligen Mähwerks erkannt wird. Dann, wenn bezogen auf eine Überlastkupplung des jeweiligen Mähwerks abtriebsseitige Drehzahlen der Mähwerke überwacht werden, um eine Überlastsituation zu erkennen, kann die Erfindung ohne weiteren Hardware-Aufwand umgesetzt werden, da in Mähwerken Drehzahlsensoren verbaut sind, welche bezogen auf eine Überlastkupplung des jeweiligen Mähwerks abtriebsseitige Drehzahlen der Mähwerke erfassen. Vorzugsweise werden als abtriebsseitige Drehzahlen des jeweiligen Mähwerks die Drehzahlen der Mähorgane sensorisch erfasst.

Nach einer ersten Variante wird die abtriebsseitige Drehzahl eines jeweiligen Mähwerks mit einer abtriebsseitigen Drehzahl eines anderen Mähwerks verglichen, wobei dann, wenn die Differenz zwischen den abtriebsseitigen Drehzahlen zweier Mähwerke größer als ein Grenzwert ist, an demjenigen Mähwerk mit der kleineren Drehzahl eine Überlastsituation insbesondere an der Überlastkupplung des jeweiligen Mähwerks erkannt wird.

Nach einer weiteren Variante werden auch antriebsseitige Drehzahlen der Mähwerke überwacht, wobei eine Überlastsituation an einem jeweiligen Mähwerk abhängig von der abtriebsseitigen Drehzahl und der antriebsseitigen Drehzahl des jeweiligen Mähwerks erkannt wird, insbesondere derart, dass dann, wenn an einem jeweiligen Mähwerk eine Differenz zwischen der abtriebsseitigen Drehzahl und der antriebsseitigen Drehzahl größer als ein Grenzwert ist, eine Überlastsituation des jeweiligen Mähwerks erkannt wird.

Mit diesen Varianten kann eine Überlastkupplung vor einer thermischen Überbeanspruchung und thermischen Zerstörung geschützt werden. Die erste Variante ist dabei besonders einfach und daher bevorzugt.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, anhand der Zeichnung näher erläutert. Dabei zeigt:
- Fig. 1: eine Draufsicht einer landwirtschaftlichen Erntemaschine mit zwei Heckmähwerken und einem Frontmähwerk,
- Fig. 2: eine Ansicht von hinten auf die Heckmähwerke mit einem aus- bzw. angehobenem Heckmähwerk.

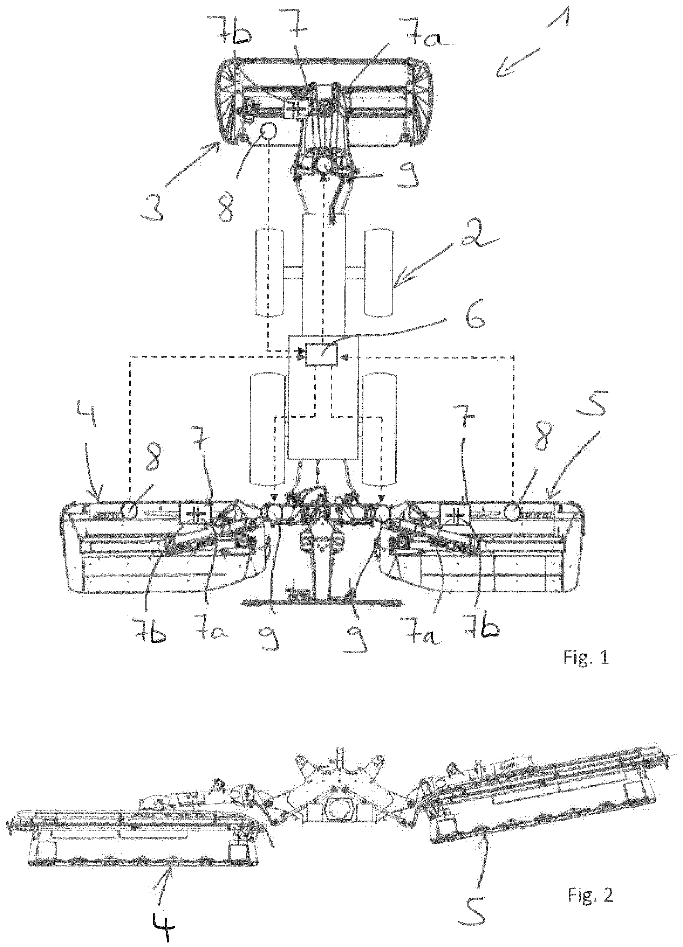

Fig. 1 zeigt eine landwirtschaftliche Erntemaschine 1, die ein Trägerfahrzeug 2 und mehrere am Trägerfahrzeug 2 montierte Mähwerke 3, 4 und 5 aufweist. Bei dem Mähwerk 3 handelt es sich in Fig. 1 um ein Frontmähwerk, bei den Mähwerken 4 und 5 um Heckmähwerke. Jedes der Mähwerke 3, 4 und 5 verfügt über Mähorgane (nicht gezeigt) zum Mähen von Erntegut. Die Mähorgane werden auch als Schneidorgane bezeichnet.

Fig. 1 zeigt weiterhin, dass jedem der Mähwerke 3, 4 und 5 eine Überlastkupplung 7 zugeordnet ist. Bildet sich zum Beispiel an einem der Mähwerke 3, 4, 5 ein Stopfer aus, d.h. die Mähorgane werden durch Erntegut, Erdanhäufungen oder durch einen Fremdkörper stark abgebremst oder blockiert, oder gelangt das jeweilige Mähwerk 3, 4, 5 in den Bereich eines Wasserlochs bzw. einer Erdanhäufung, so spricht die jeweilige Überlastkupplung 7 an, um das jeweilige Mähwerk 3, 4, 5 vor einer mechanischen Beschädigung zu schützen.

Bei der jeweiligen Überlastkupplung 7 handelt es sich beispielsweise um eine Reibungskupplung mit einer antriebsseitigen Kupplungshälfte 7a und einer abtriebsseitigen Kupplungshälfte 7b. Die antriebsseitige Kupplungshälfte 7a wird dabei ausgehend vom Zugfahrzeug 2 mit Antriebsleistung versorgt. Die abtriebsseitige Kupplungshälfte 7b steht mit den Mähorganen des jeweiligen Mähwerks 3, 4, 5 in Verbindung.

Spricht die jeweilige Überlastkupplung 7 an, so besteht Schlupf zwischen der jeweiligen antriebsseitigen Kupplungshälfte 7a derselben und der jeweiligen abtriebsseitigen Kupplungshälfte 7b derselben. Ist hingegen die jeweilige Überlastkupplung 7 geschlossen, so besteht kein Schlupf zwischen den jeweiligen Kupplungshälften 7a, 7b derselben.

Dann, wenn eine jeweilige Überlastkupplung 7 ausgelöst wurde und demnach zwischen den jeweiligen Kupplungshälften 7a, 7b derselben Schlupf besteht, entsteht Reibungswärme, wodurch die jeweilige Überlastkupplung 7 einer thermischen Belastung ausgesetzt ist. Bei der Erfindung geht es darum, die thermische Belastung einer Überlastkupplung 7 eines Mähwerks 3, 4, 5 zu reduzieren und so dieselbe vor einer thermischen Beschädigung oder gar Zerstörung zu schützen.

Erfindungsgemäß wird der Betrieb der Mähwerke 3, 4, 5 der landwirtschaftlichen Erntemaschine 1 der Fig. 1 überwacht. Abhängig von der Überwachung des Betriebs der Mähwerke 3, 4, 5 wird eine Überlastsituation an mindestens einem der Mähwerke 3, 4, 5 erkannt. Wird eine Überlastsituation an einem der Mähwerke 3, 4, 5 der landwirtschaftlichen Erntemaschine 1 erkannt, so wird das jeweilige Mähwerk 3, 4, 5, für welches die Überlastsituation erkannt wird, vorzugsweise durch Ansteuerung einer Mähwerks-Hydraulik 9 ausgehoben, also vom Untergrund abgehoben. Vorzugsweise werden zur Überwachung des Betriebs der Mähwerke 3, 4, 5 die Drehzahlen der Mähwerke 3, 4, 5 überwacht. Das Erkennen einer Überlastsituation an einem jeweiligen Mähwerk 3, 4, 5 erfolgt abhängig von der Überwachung dieser Drehzahlen.

Zumindest wird die bezogen auf die jeweilige Überlastkupplung 7 abtriebsseitige Drehzahl der Mähwerke 3, 4, 5 überwacht. In jedem der Mähwerke 3, 4, 5 ist hierzu ein Drehzahlsensor 8 verbaut, mit welchem die bezogen auf die jeweilige Überlastkupplung 7 abtriebsseitige Drehzahl des jeweiligen Mähwerks 3, 4, 5 erfasst werden kann. Eine Überlastsituation an mindestens einem der Mähwerke 3, 4, 5 wird dann zumindest abhängig von der überwachten abtriebsseitigen Drehzahl des jeweiligen Mähwerks 3, 4, 5 erkannt.

In einer ersten Variante der Erfindung wird an jedem der Mähwerke 3, 4, 5 die jeweilige bezogen auf die Überlastkupplung 7 abtriebsseitige Drehzahl des jeweiligen Mähwerks 3, 4, 5 erfasst. Ferner wird die abtriebsseitige Drehzahl eines jeweiligen Mähwerks 3, 4, 5 mit der abtriebsseitigen Drehzahl eines anderen Mähwerks 3, 4, 5 verglichen. So kann die abtriebsseitige Drehzahl des Mähwerks 4 mit der abtriebsseitigen Drehzahl des Mähwerks 3 und/oder der abtriebsseitigen Drehzahl des Mähwerks 5 verglichen werden. Dann, wenn die Differenz zwischen der abtriebsseitigen Drehzahl zweier Mähwerke größer als ein steuerungsseitig hinterlegter, applizierbarer Grenzwert ist, wird an demjenigen Mähwerk mit der kleineren abtriebsseitigen Drehzahl eine Überlastsituation erkannt. Wird also die abtriebsseitige Drehzahl des Mähwerks 4 mit der abtriebsseitigen Drehzahl des Mähwerks 5 verglichen und festgestellt, dass die Differenz zwischen diesen abtriebsseitigen Drehzahlen größer als ein Grenzwert ist, so wird dann, wenn die abtriebsseitige Drehzahl des Mähwerks 4 kleiner als die abtriebsseitige Drehzahl des Mähwerks 5 ist, am Mähwerk 4 auf eine Überlastsituation geschlossen.

Nach einer weiteren Variante werden nicht nur bezogen auf die jeweilige Überlastkupplung 7 abtriebsseitige Drehzahlen der Mähwerke 3, 4, 5, sondern auch bezogen auf die jeweilige Überlastkupplung 7 antriebsseitige Drehzahlen der Mähwerke 3, 4, 5 überwacht, wobei dann eine Überlastsituation an einem jeweiligen Mähwerk 3, 4, 5 abhängig von der abtriebsseitigen Drehzahl und abhängig von der antriebsseitigen Drehzahl des jeweiligen Mähwerks erkannt wird. Wird zum Beispiel am Mähwerk 4 festgestellt, dass die Differenz zwischen einer antriebsseitigen und abtriebsseitigen Drehzahl des Mähwerks 4 größer als ein steuerungsseitig hinterlegter, applizierbarer Grenzwert ist, so wird darauf geschlossen, dass sich die Überlastkupplung 7 des jeweiligen Mähwerks 4 im Schlupf befindet und demnach an dem jeweiligen Mähwerk 4 eine Überlastsituation vorliegt. Wie bereits ausgeführt wird dann, wenn an einem Mähwerk 3, 4, 5 eine Überlastsituation erkannt wird, das jeweilige Mähwerk 3, 4, 5 vorzugsweise durch Ansteuerung der Mähwerks-Hydraulik 9 des jeweiligen Mähwerks 3, 4, 5 ausgehoben, also vom Untergrund abgehoben, um die Überlastsituation zu beseitigen.

Durch das Ausheben wird die Überlastsituation an der jeweiligen Überlastkupplung 7 aufgelöst und dieselbe vor einem weiteren Wärmeeintrag und einer thermischen Beschädigung oder gar Zerstörung geschützt. In Fig. 2 ist das Mähwerk 5 ausgehoben.

Die Erfindung betrifft weiterhin ein Steuergerät 6 der landwirtschaftlichen Erntemaschine 1, welches dazu eingerichtet ist, das oben beschriebene Verfahren steuerungsseitig automatisch auszuführen. So ist das Steuergerät 6 eingerichtet, eine Überlastsituation während des Betriebs der landwirtschaftlichen Erntemaschine 1 an mindestens einem der Mähwerke 3, 4, 5 abhängig von der Überwachung des Betriebs der Mähwerke 3, 4, 5 zu erkennen und abhängig hiervon eine Stellgröße für die jeweilige Mähwerks-Hydraulik 9 auszugeben, um dasjenige Mähwerk 3, 4, 5, für welches eine Überlastsituation erkannt wird, automatisiert bis zu einer im Steuergerät 6 hinterlegten, applizierbaren Höhe auszuheben.

Bei dem Steuergerät 6 handelt es sich dabei um ein elektronisches Steuergerät, welches über Datenschnittstellen verfügt, um mit den an der Ausführung des erfindungsgemäßen Verfahrens beteiligten Baugruppen Daten auszutauschen. So empfängt das Steuergerät 6 abtriebsseitige Drehzahlen der Mähwerke 3, 4, 5 von Drehzahlsensoren 8 der Mähwerke 3, 4, 5. Das Steuergerät 6 kann über die Datenschnittstellen eine Stellgröße an dasjenige Mähwerk 3, 4, 5 ausgeben, für welches eine Überlastsituation erkannt wurde, nämlich an einem Aktor des jeweiligen Mähwerks 3, 4, 5, über welches das jeweilige Mähwerk 3, 4, 5 vom Untergrund abgehoben werden kann. Das Steuergerät 6 verfügt ferner über einen Prozessor zur Datenverarbeitung und einen Speicher zur Datenspeicherung.

Erfindungsgemäß wird abhängig von Drehzahlen der Mähwerke 3, 4, 5 der landwirtschaftlichen Erntemaschine 1 eine Überlastsituation an mindestens einem der Mähwerke 3, 4, 5 erkannt und dann, wenn eine solche Überlastsituation erkannt wurde, das jeweilige Mähwerk 3, 4, 5 automatisch durch Ansteuerung der jeweiligen Mähwerks-Hydraulik 9 ausgehoben und so vom Untergrund abgehoben. So kann das Überlastmoment an dem jeweiligen Mähwerk 3, 4, 5 reduziert und die Überlastkupplung 7 vor einer thermischen Beschädigung oder gar Zerstörung geschützt werden.

Im Steuergerät 6 kann die erfindungsgemäße Funktion bzw. das erfindungsgemäße Verfahren aktiviert und deaktiviert werden.

Die antriebsseitigen Drehzahlen können beispielsweise durch weitere Sensoren erfasst werden oder anhand einer Drehzahl einer Antriebswelle des Trägerfahrzeugs 2 ermittelt werden. Die Drehzahl der Antriebswelle des Trägerfahrzeugs 2 wird vorzugsweise über eine Datenleitung eines in der Landtechnik gebräuchlichen ISOBUS an das Steuergerät 6 der Erntemaschine 1 übertragen.

Je nach Ausstattung des Trägerfahrzeugs 2 kann das Steuergerät 6 einen Aktor eines anzuhebenden Mähwerks 3, 4, 5 entweder direkt ansteuern oder das Steuergerät 6 der landwirtschaftlichen Erntemaschine 1 sendet ein Signal an ein Steuergerät des Trägerfahrzeugs 2, um dort einen entsprechenden Steuerbefehl auszulösen oder anzufordern.

### Bezugszeichenliste

- 1: landwirtschaftliche Erntemaschine
- 2: Trägerfahrzeug
- 3: Mähwerk
- 4: Mähwerk
- 5: Mähwerk
- 6: Steuergerät
- 7: Überlastkupplung
- 7a: antriebsseitige Kupplungshälfte
- 7b: abtriebsseitige Kupplungshälfte
- 8: Sensor
- 9: Mähwerks-Hydraulik

## Patentansprüche

1. Verfahren zum Betreiben einer landwirtschaftlichen Erntemaschine (1),
wobei die landwirtschaftliche Erntemaschine (1) mehrere Mähwerke (3, 4, 5) zum Mähen von Erntegut aufweist,
**gekennzeichnet durch** zumindest folgende Schritte
Überwachen des Betriebs der Mähwerke (3, 4, 5),
Erkennen einer Überlastsituation an mindestens einem der Mähwerke (3, 4, 5) abhängig von der Überwachung,
Ausheben desjenigen Mähwerks (3, 4, 5), für welches eine Überlastsituation erkannt wird.

2. Verfahren nach Anspruch 1, **dadurch gekennzeichnet, dass**
zum Überwachen des Betriebs der Mähwerke (3, 4, 5) Drehzahlen der Mähwerke (3, 4, 5) überwacht werden,
das Erkennen einer Überlastsituation an mindestens einem der Mähwerke (3, 4, 5) abhängig von der Überwachung der Drehzahlen der Mähwerke (3, 4, 5) erfolgt.

3. Verfahren nach Anspruch 1 oder 2, **dadurch gekennzeichnet, dass**
zumindest abtriebsseitige Drehzahlen der Mähwerke (3, 4, 5) überwacht werden,
eine Überlastsituation an mindestens einem der Mähwerke (3, 4, 5) zumindest abhängig von der abtriebsseitigen Drehzahl des jeweiligen Mähwerks (3, 4, 5) erkannt wird.

4. Verfahren nach Anspruch 3, **dadurch gekennzeichnet, dass**
die abtriebsseitige Drehzahl eines jeweiligen Mähwerks (3, 4, 5) mit einer abtriebsseitigen Drehzahl eines anderen Mähwerks (3, 4, 5) verglichen wird, wobei dann, wenn die Differenz zwischen den abtriebsseitigen Drehzahlen zweier Mähwerke (3, 4, 5) größer als ein Grenzwert ist, an demjenigen Mähwerk (3, 4, 5) mit der kleineren abtriebsseitigen Drehzahl eine Überlastsituation erkannt wird.

5. Verfahren nach Anspruch 3, **dadurch gekennzeichnet, dass**
auch antriebsseitige Drehzahlen der Mähwerke (3, 4, 5) überwacht werden,
eine Überlastsituation an dem jeweiligen Mähwerk (3, 4, 5) abhängig von der abtriebsseitigen Drehzahl und der antriebsseitigen Drehzahl des jeweiligen Mähwerks (3, 4, 5) erkannt wird.

6. Verfahren nach Anspruch 5, **dadurch gekennzeichnet, dass**
dann, wenn an einem jeweiligen Mähwerk (3, 4, 5) eine Differenz zwischen der abtriebsseitigen Drehzahl und der antriebsseitigen Drehzahl größer als ein Grenzwert ist, eine Überlastsituation des jeweiligen Mähwerks (3, 4, 5) erkannt wird.

7. Steuergerät (6) einer landwirtschaftlichen Erntemaschine (1),
wobei die landwirtschaftliche Erntemaschine (1) mehrere Mähwerke (3, 4, 5) zum Mähen von Erntegut aufweist,
**dadurch gekennzeichnet, dass**
das Steuergerät (6) eingerichtet ist, eine Überlastsituation an mindestens einem der Mähwerke (3, 4, 5) abhängig von der Überwachung des Betriebs der Mähwerke (3, 4, 5) zu erkennen und abhängig hiervon eine Stellgröße auszugeben, um dasjenige Mähwerk (3, 4, 5), für welches eine Überlastsituation erkannt wird, auszuheben.

8. Steuergerät (6) nach Anspruch 7, **dadurch gekennzeichnet, dass** das Steuergerät (6) eingerichtet ist, das Verfahren nach einem der Ansprüche 1 bis 6 steuerungsseitig automatisch auszuführen.

9. Landwirtschaftliche Erntemaschine (1), mit Mähwerken (3, 4, 5) und mit einem Steuergerät (6) nach Anspruch 7 oder 8.
